# EUROPÄISCHE PATENTSCHRIFT

(11) **EP 2 799 233 B1**
(45) Veröffentlichungstag und Bekanntmachung des Hinweises auf die Patenterteilung: **28.06.2017**
(21) Anmeldenummer: 13166028.4
(22) Anmeldetag: 30.04.2013
(51) Int. Cl.: B32B 27/32, C08L 3/02, C08L 23/02

(54) **Mehrschichtige, durch Coextrusion hergestellte Folie, insbesondere Verpackungsfolie**
Multilayer film produced by co-extrusion, in particular packaging film
Film multicouches fabriqué par coextrusion, notamment film d'emballage

(43) Veröffentlichungstag der Anmeldung: 05.11.2014
(73) Patentinhaber: Mondi AG, 1030 Wien (AT)
(72) Erfinder: Hawighorst, Joachim, 49124 Georgsmarienhütte (DE); Bader, Herbert, 48356 Nordwalde (DE)
(74) Vertreter: Lorenz, Bernd Ingo Thaddeus

(56) Entgegenhaltungen:
- WO-A1-91/16375

## Beschreibung

Die Erfindung betrifft eine mehrschichtige, durch Coextrusion hergestellte Folie, insbesondere Verpackungsfolie, mit einer Kernschicht aus einer Kernschichtmischung, einer Siegelschicht aus einer Siegelschichtmischung und einer Druckschicht aus einer Druckschichtmischung.

Mehrschichtige Verpackungsfolien der vorstehend genannten Art sind aus der Praxis grundsätzlich bekannt. Um den Einsatz von ölbasierten Produkten, beispielsweise Polyolefinen, zu reduzieren, ist es bekannt, einen Teil des in der Kernschichtmischung enthaltenen Polymers durch Stärke zu ersetzen. Die WO 2011/009165 A1 beschreibt eine dreischichtige Folie deren Kernschicht zwischen 10 und 80 Gew.-% thermoplastische Stärke enthalten kann. Nachteilig bei den aus der Praxis bekannten Folien ist jedoch, dass durch den Ersatz eines Teils des Polymers der Kernschichtmischung durch die Stärke insbesondere die Zugfestigkeit der Folie deutlich herabgesetzt wird. Dadurch reißen die Folien leicht, wodurch der Einsatz solcher Folien im Verpackungsbereich wegen der hohen mechanischen Beanspruchungen beim Füllvorgang nur eingeschränkt möglich ist. Im Hinblick auf die steigenden Ölpreise wird jedoch ein hoher Anteil nachwachsender Rohstoffe in der Folie angestrebt.

Durch WO 91/16375 wird eine mehrschichtige Folie offenbart, die in zumindest einer Schicht einen Blend mit Stärke und einem Polyolefin enthält.

Der Erfindung liegt daher das technische Problem zugrunde, eine Folie der eingangs genannten Art anzugeben, die sich bei einem großen Anteil an nachwachsenden Rohstoffen durch eine hohe mechanische Festigkeit auszeichnet und die problemlos herstellbar ist.

Zur Lösung des technischen Problems lehrt die Erfindung eine mehrschichtige, durch Coextrusion hergestellte Folie, insbesondere Verpackungsfolie, mit einer Kernschicht aus einer Kernschichtmischung, einer Siegelschicht aus einer Siegelschichtmischung und einer Druckschicht aus einer Druckschichtmischung, wobei die Kernschicht zwischen der Siegelschicht und der Druckschicht angeordnet ist, wobei die Kernschichtmischung zumindest ein Polyolefin und Stärke, vorzugsweise thermoplastische Stärke, enthält und wobei die Siegelschichtmischung und die Druckschichtmischung jeweils zumindest ein Polyolefin und jeweils Stärke, vorzugsweise thermoplastische Stärke, enthalten. Die Folie kann insbesondere zur Herstellung von Beutelverpackungen verwendet werden. Besonders bevorzugt wird die erfindungsgemäße Folie zur Herstellung von Wicketbeuteln verwendet, die hauptsächlich im Hygiene- und Kosmetikbereich verwendet werden. Aus einer Folienrolle werden flachgelegte Beutel vorkonfektioniert, die in einer Verpackungsmaschine mit einem in die Verpackungsmaschine eingebrachten Stapel aus Wickets, z. B. mehreren zu einem Stapel zusammengefassten Windeln, beschickt werden. Ein wesentliches Problem, welches durch die Erfindung gelöst wird, besteht darin, die für den Verpackungsprozess notwendigen Folienfestigkeiten zu erreichen. Beim Verpacken ist die Folie aufgrund der hohen Abpackgeschwindigkeit starken mechanischen Beanspruchungen ausgesetzt. Die Beutel werden geöffnet und der Produktstapel in die Beutel eingebracht. Dabei darf die Folie nicht zu stark gedehnt werden und darf natürlich auch nicht reißen. Wichtig ist, dass die Folie über einer Dehnung von bis zu 10 % eine ausreichend hohe Festigkeit aufweist und die Siegelschichtmischung gut unter Ausbildung fester Siegelnähte siegelfähig ist.

Die Kernschicht der erfindungsgemäßen Folie ist sandwichartig zwischen der Siegelschicht und der Druckschicht angeordnet. Bei der Stärke handelt es sich im Rahmen der Erfindung z. B. um Maisstärke. Grundsätzlich ist auch der Einsatz anderer Stärken möglich. Vorzugsweise wird in allen Schichten der Folie eine thermoplastische Stärke (TPS) eingesetzt. Die erfindungsgemäße Folie zeichnet sich also durch einen hohen Anteil nachwachsender Rohstoffe aus, wobei die nachwachsenden Rohstoffe, vorzugsweise die thermoplastische Stärke, in allen Schichten der durch Coextrusion herstellbaren Folie angeordnet ist. Durch die Verteilung der Stärke in allen Schichten der Folie wird eine problemlose Extrudierbarkeit der Folie sichergestellt. Die Kernschicht, Siegelschicht und Druckschicht zeichnen sich durch ähnliche bzw. im Wesentlichen gleiche Fließ- und Dehneigenschaften aus, so dass bei der Coextrusion der einzelnen Schichten keine Instabilitäten auftreten können, wodurch beispielsweise Schmelzebruch, unebene Oberflächen oder Dickenschwankungen vermieden werden.

Der Stärkegehalt der Kernschichtmischung ist zweckmäßig höher und vorzugsweise zumindest doppelt so hoch und bevorzugt zumindest dreimal so hoch wie der Stärkegehalt der Druckschichtmischung und/oder Siegelschichtmischung. Es hat sich als vorteilhaft herausgestellt, dass der Stärkegehalt der Druckschichtmischung größer ist als der Stärkegehalt der Siegelschichtmischung. Auf diese Weise wird gewährleistet, dass durch die Siegelschicht eine zuverlässige Siegelbarkeit der Folie gewährleistet ist. Ferner ist die aus der Druckschichtmischung gebildete Druckschicht problemlos bedruckbar. Durch eine Einstellung des Stärkegehaltes der Druckschichtmischung kann die Mattheit der Druckschichtoberfläche der Folie beeinflusst werden.

Zweckmäßigerweise enthält die Kernschichtmischung zwischen 5 und 50 Gew.-% Stärke. Vorzugsweise enthält die Kernschicht bzw. die Kernschichtmischung 5 bis 20 Gew.-% Stärke. Die Druckschichtmischung und die Siegelschichtmischung enthalten jeweils 2 bis 25 Gew.-% und vorzugsweise 3 bis 12 Gew.-% Stärke. Auf diese Weise wird die Siegelfähigkeit der Siegelschicht bzw. die Bedruckbarkeit der Druckschicht sichergestellt. Es ist möglich, dass der Stärkegehalt der Druckschichtenmischung genauso groß bzw. ungefähr genauso groß wie der Stärkegehalt der Siegelschichtmischung ist. Es empfiehlt sich, dass die Stärke als TPS-Compound in der Kernschichtmischung und/oder Siegelschichtmischung und/oder Druckschichtmischung enthalten ist. Zweckmäßigerweise beinhaltet die TPS-Compound 40 bis 50 Gew.-% Stärke und 60 bis 50 Gew.-% Verarbeitungszusätze, welche Verarbeitungszusätze beispielsweise mehrwertige Alkohole, vor allem Glycerol und/oder Sorbitol, empfohlenermaßen Fettsäuren bzw. Fettsäuresalze, Ethylen-Acrylsäure-Copolymere und/oder gegebenenfalls zumindest ein Polyethylen enthalten.

Es hat sich als vorteilhaft herausgestellt, dass die Kernschichtmischung zumindest ein Polypropylen als Polyolefin enthält. Durch den Einsatz des Polypropylens zeichnet sich die Kernschicht und somit auch die Folie durch eine hervorragende Festigkeit aus. Als vorteilhaft hat sich der Einsatz eines Propylen-Blockcopolymers (PP-BC) herausgestellt. Es liegt im Rahmen der Erfindung, dass das PP-BC aus Propylen und zumindest einem α-Olefin gebildet ist. Empfohlenermaßen enthält die Kernschicht ein Propylen-Random-Copolymer (PP-RC). Durch das PP-RC wird insbesondere die Haftung zwischen den einzelnen Schichten sowie das Fließverhalten der Kernschicht bei der Extrusion verbessert. Der Einsatz von PP-RC hat sich besonders bewährt, wenn in der Kernschichtmischung PP-BC oder eine Mischung aus PP-BC und einem Polypropylen-Homopolymer (PP-H) eingesetzt ist. Zweckmäßigerweise verfügt das Polypropylen über einen Schmelzeindex MFI von mehr als 1 (gemessen nach DIN 53735, Prüfbedingungen 230 °C / 2,16 Kg). Empfohlenermaßen enthält die Kernschichtmischung zumindest 15 bis 60 Gew.-% und vorzugsweise 20 bis 50 Gew.-% Polypropylen. Bevorzugt enthält die Kernschichtmischung 15 bis 40 Gew.-% und besonders bevorzugt 20 bis 30 Gew.-% eines PP-BC. Vorzugsweise beinhaltet die Kernschichtmischung 5 bis 30 Gew.-% und besonders bevorzugt 10 bis 20 Gew.-% eines PP-RC.

Gemäß einer Ausführungsform der Erfindung enthält die Kernschichtmischung zumindest ein Polyethylen als Polyolefin. Beispielsweise weist die Kernschichtmischung 5 bis 35 Gew.-%, vorzugsweise 15 bis 25 Gew.-% und bevorzugt etwa 20 Gew.% eines Polyethylens auf. Vorteilhafterweise wird als Polyethylen ein metallocenkatalysiertes lineares Polyethylen niedriger Dichte (mLLDPE) eingesetzt. Durch das Polyethylen erhält die Kernschicht eine verbesserte Zugfestigkeit. Weiterhin wird die Weiterreißfestigkeit der Kernschicht und somit der Folie erhöht. Als besonders vorteilhaft hat sich der Einsatz eines mLLDPE mit 1-Hexen als Comonomer herausgestellt. Dieses Polymer wird auch als mLLDPE-C6 bezeichnet. Grundsätzlich ist es auch möglich, dass dem mLLDPE als Comonomere α-Olefine, wie beispielsweise 1-Buten oder 1-Octen zugesetzt wurden. Empfohlenermaßen beträgt der Schmelzeindex MFI des Polyethylens mehr als 1,5 (gemessen nach DIN 53735, Prüfbedingungen 190°/2,16 Kg).

Erfindungsgemäß enthalten die Siegelschichtmischung und/oder die Druckschichtmischung jeweils zumindest ein Polypropylen. Dabei ist das in der Siegelschichtmischung und/oder der Druckschichtmischung enthaltene Polypropylen ein Polypropylen-Random-Copolymer (PP-RC). Das PP-RC weist vorteilhafterweise einen Comonomeren Anteil von mindestens 4 Gew.-% bezogen auf die Masse des PP-RC auf. Besonders bevorzugt wird als Comonomer Ethylen eingesetzt. Durch den Einsatz des PP-RC wird vor allem die Adhäsion bzw. Haftung zwischen der Siegelschicht und der Kernschicht bzw. zwischen der Kernschicht und der Druckschicht verbessert. Der Einsatz eines Polypropylen-Copolymers in der Folie erschwert die Delamination der einzelnen Schichten. Es liegt im Rahmen der Erfindung, dass die Siegelschichtmischung und/oder die Druckschichtmischung jeweils 5 bis 50 Gew.-% und bevorzugt jeweils 10 bis 35 Gew.-% Polypropylen enthalten.

Erfindungsgemäß ist vorgesehen, dass die Siegelschichtmischung und/oder die Druckschichtmischung jeweils ein Polyethylen als Polyolefin enthalten. In vorteilhafter Weise wird durch das Polyethylen in der Siegelschicht die Siegelfähigkeit der Folie sichergestellt. Gemäß einer Ausführungsform beträgt die Siegelnahtfestigkeit (gemessen nach ISO 527, Siegelbedingungen: Temperatur 140 °C, Druck = 3 bar, Zeit = 0,5 s) ungefähr 11 N. Zweckmäßigerweise ist das in der Siegelschichtmischung und/oder in der Druckschichtmischung enthaltene Polyethylen zumindest eine aus der Gruppe "low density Polyethylen (LDPE), linear low density Polyethylen (LLDPE), metallocenkatalysiertes linear low density Polyethylen (mLLDPE)" ausgewählte Komponente. Vorzugsweise enthält das in der Siegelschichtmischung und/oder in der Druckschichtmischung enthaltene Polyethylen, vorzugsweise mLLDPE, zumindest ein α-Olefin als Comonomer, wobei als α-Olefin beispielsweise 1-Buten, 1-Hexen und/oder 1-Octen einsetzbar sind. Besonders bevorzugt ist das Comonomer in dem mLLDPE 1-Hexen.

Gemäß einer bevorzugten Ausführungsform weisen die Siegelschichtmischung und/oder die Druckschichtmischung und/oder die Kernschichtmischung jeweils zumindest einen Kompatibilisator auf. Der Kompatibilisator ist gleichsam ein Haftvermittler, durch den eine Bindung der polaren Gruppen der Stärke durch elektrostatische Wechselwirkungen mit dem Polypropylen erzielt wird. Besonders bevorzugt wird als Kompatibilisator ein Maleinsäureanhydrid gepfropftes Polypropylen, vorzugsweise Polypropylen-Copoplymer (PP-g-MA) eingesetzt. Es liegt im Rahmen der Erfindung, dass die Siegelschichtmischung und/oder die Druckschichtmischung und/oder die Kernschichtmischung jeweils 1 bis 10 Gew.-% des Kompatibilisators enthalten. Es ist möglich, dass der Anteil des Kompatibilisators in der Kernschichtmischung größer ist als der Anteil des Kompatibilisators in der Siegelschichtmischung und/oder Druckschichtmischung. Empfohlenermaßen weist die Siegelschichtmischung und/oder die Druckschichtmischung jeweils 1 bis 10 Gew.-% des Kompatibilisators und vorzugsweise 1 bis 5 Gew.-% des Kompatibilisators auf. Gemäß einer Ausführungsform enthält die Kernschichtmischung und/oder die Siegelschichtmischung jeweils ein Gleitmittel. Vorzugsweise ist die Siegelschichtmischung bzw. die Siegelschicht mit einer hohen Gleitfähigkeit auszugestalten. Besonders bevorzugt ist die Druckschichtmischung bzw. die Druckschicht gleitmittelfrei ausgestaltet. Es hat sich gezeigt, dass der Einsatz eines Gleitmittels in der Druckschicht die Bedruckbarkeit bzw. die Farbhaftung an der Druckschicht stört, da das Gleitmittel an die Oberfläche der Druckschicht migriert. Gemäß einer möglichen Ausführungsform der Erfindung weist die Kernschichtmischung zumindest einen weiteren Zusatzstoff auf. Der weitere Zusatzstoff kann beispielsweise ein Pigment bzw. ein Farbstoff oder eine Farbstoffmischung sein. Vorteilhafterweise sind die Druckschichtmischung und/oder Siegelschichtmischung jeweils zusatzstofffrei, insbesondere pigmentfrei bzw. farbstofffrei ausgebildet. Dadurch, dass die Kernschicht zwischen der Siegelschicht und der Druckschrift angeordnet ist, wird beim Extrudieren der mehrschichtigen Folie erreicht, dass die Kernschicht beim Austritt aus einem Düsenspalt nicht in unmittelbarem Kontakt zu einer Düse des Blaskopfes zur Herstellung der mehrschichtigen Folie kommt.

Gemäß einer Ausführungsform weist die Folie eine Dicke von ungefähr 50 µm auf. Es ist möglich, dass die Druckschicht und die Siegelschicht gleich dick sind. Vorteilhafterweise ist die Kernschicht dicker als die Druckschicht und/oder Siegelschicht. Gemäß einer besonders bevorzugten Ausführungsform ist die Kernschicht zumindest doppelt so dick wie die Druckschicht und/oder Siegelschicht.

Der Erfindung liegt die Erkenntnis zugrunde, dass sich die erfindungsgemäße Folie trotz des hohen Anteils nachwachsender Rohstoffe (Stärke bzw. TPS) problemlos extrudieren lässt. Wesentlich dabei ist, dass in allen Schichten der Folie Stärke vorhanden ist, wodurch sich die erfindungsgemäße Folie durch einen weitgehend symmetrischen Schichtenaufbau auszeichnet. Durch die sandwichartige Anordnung der Kernschicht zwischen der Druckschicht und der Siegelschicht wird erreicht, dass die Kernschicht während der Extrusion beim Austritt aus einem Düsenspalt keinen Kontakt zu beispielsweise Metalloberflächen der Düse des Blaskopfes hat. Ein Kontakt zwischen der stärkereichen und fakultativ pigmenthaltigen Kernschicht mit der Düse kann zur Ausbildung von Ablagerungen am Düsenspalt führen, wodurch Störungen bei der Herstellung der mehrschichtigen Folie resultieren. Da die Kernschicht durch die Druckschicht und die Siegelschicht von den Oberflächen am Düsenspalt getrennt ist, wird die Bildung von Ablagerungen, die beispielsweise durch den hohen Stärkegehalt der Kernschicht und/oder durch in der Kernschicht enthaltene Zusätze verursacht werden können, vermieden. Die erfindungsgemäße Folie zeichnet sich vor allem durch eine hohe Festigkeit und Beständigkeit gegen Delamination aus. Es hat sich gezeigt, dass die erfindungsgemäße Folie problemlos bedruckbar und siegelbar ist. Überraschenderweise erfährt die mit der Siegelschicht erzielbare Siegelnahtfestigkeit trotz der in der Siegelschicht enthaltenen Stärke keine bzw. nur eine unwesentliche Verschlechterung.

### Beispiele

**Beispiel 1 - TPS-PE-PP Blasfolie 50 µm (Anteil nachwachsender Rohstoffe: 10 %):**

| **Druckschicht A (12 µm)** | **Kernschicht B (26 µm)** | **Siegelschicht C (12 µm)** |
|---|---|---|
| 45 % mLLDPE | 25 % PP-BC | 43 % mLLDPE |
| 23 % LDPE | 20 % TPS-Compound | 20 % LDPE |
| 20 % PP-RC | 19 % mLLDPE | 19 % PP-RC |
| 10 % TPS-Compound | 15 % Weiß-Masterbatch | 10 % TPS-Compound |
| 2 % PP-g-MAH | 15 % PP-RC | 6 % Gleitmittel-Masterbatch |
| | 3 % PP-g-MAH | 2 % PP-g-MAH |
| | 3 % Gleitmittel-Masterbatch | |

**Beispiel 2 - TPS-PE-PP Blasfolie 50 Nm (Anteil nachwachsender Rohstoffe: 20 %):**

| **Druckschicht A (12,5 µm)** | **Kernschicht B (25 µm)** | **Siegelschicht C (12,5 µm)** |
|---|---|---|
| 45 % mLLDPE | 25 % PP-BC | 43 % mLLDPE |
| 23 % LDPE | 40 % TPS-Compound | 20 % LDPE |
| 20 % PP-RC | 18 % mLLDPE | 19 % PP-RC |
| 20 % TPS-Compound | 15 % Weiß-Masterbatch | 10 % TPS-Compound |
| 2 % PP-g-MAH | 15 % PP-RC | 6 % Gleitmittel-Masterbatch |
| | 4 % PP-g-MAH | 2 % PP-g-MAH |
| | 3 % Gleitmittel-Masterbatch | |

**Vergleichsbeispiel - LDPE/LLDPE 50 µm:**

| **Druckschicht A (14 µm)** | **Kernschicht B (22 µm)** | **Siegelschicht C (14 µm)** |
|---|---|---|
| 60 % LLDPE | 70 % LLDPE | 65 % LLDPE |
| 40 % LDPE | 15 % LDPE | 32 % LDPE |
| | 15 % Weiß-Masterbatch | 3 % Gleitmittel-Antiblock-Masterbatch |

Die Messergebnisse aus Messungen der mechanischen Eigenschaften, der Siegelfestigkeit und Opazität werden in der nachfolgenden Tabelle wiedergegeben.

**Messwerte:**

| Film Parameter | Method | Direction | Unit | Vergleichsfolie (LDPE/LLDPE) | Beispiel 1 | Beispiel 2 |
|---|---|---|---|---|---|---|
| Renewable Content | Calc. | ----- | % | 0 | 10 | 20 |
| Thickness | ISO 4593 | ----- | µm | 50 | 50 | 50 |
| Tensile force @ 10 % | ISO 527 | MD | N | 15 | 20 | 17 |
| | ISO 527 | CD | N | 17 | 19 | 16 |
| Elongation @ break | ISO 527 | MD | % | 888 | 577 | 579 |
| | ISO 527 | CD | % | 1038 | 717 | 717 |
| COFs inside/inside | ISO 8295 | ----- | 1 | 0,18 | 0,20 | 0,18 |
| Seal strength | ISO 527 | 140 °C / 3 bar/ 0,5 s | N | 11 | 11 | 8 |
| Opacity | ISO 6504-3 | ----- | % | 67 | 65 | 65 |

## Patentansprüche

1. Mehrschichtige, durch Coextrusion hergestellte Folie, insbesondere Verpackungsfolie, mit einer Kernschicht aus einer Kernschichtmischung, einer Siegelschicht aus einer Siegelschichtmischung und einer Druckschicht aus einer Druckschichtmischung, wobei die Kernschicht zwischen der Siegelschicht und der Druckschicht angeordnet ist, wobei die Kernschichtmischung zumindest ein Polyolefin und Stärke, vorzugsweise thermoplastische Stärke, enthält und wobei die Siegelschichtmischung und die Druckschichtmischung jeweils zumindest ein Polyolefin und jeweils Stärke, vorzugsweise thermoplastische Stärke, enthalten, **dadurch gekennzeichnet, dass** die Siegelschichtmischung und/oder die Druckschichtmischung jeweils zumindest ein Polypropylen enthält, wobei das in der Siegelschichtmischung und/oder in der Druckschichtmischung enthaltene Polypropylen ein Polypropylen-Random-Copolymer (PP-RC) ist und dass die Siegelschichtmischung und/oder Druckschichtmischung jeweils ein Polyethylen als Polyolefin enthält.

2. Mehrschichtige Folie nach Anspruch 1, wobei der Stärkegehalt der Kernschichtmischung höher, vorzugsweise zumindest doppelt so hoch, wie der Stärkegehalt der Druckschichtmischung und/oder Siegelschichtmischung ist.

3. Mehrschichtige Folie nach einem der Ansprüche 1 oder 2, wobei die Kernschichtmischung zwischen 5 und 50 Gew.-% Stärke enthält.

4. Mehrschichtige Folie nach einem der Ansprüche 1 bis 3, wobei die Druckschichtmischung bzw. die Siegelschichtmischung jeweils 2 bis 25 Gew.-% Stärke beinhalten.

5. Mehrschichtige Folie nach einem der Ansprüche 1 bis 4, wobei die Kernschichtmischung zumindest ein Polypropylen als Polyolefin enthält.

6. Mehrschichtige Folie nach Anspruch 5, wobei das Polypropylen einen Schmelzeindex (MFI) von mehr als 1 aufweist.

7. Mehrschichtige Folie nach einem der Ansprüche 5 oder 6, wobei die Kernschichtmischung ein Polypropylen-Blockcopolymer (PP-BC) enthält.

8. Mehrschichtige Folie nach Anspruch 7, wobei der Anteil des PP-BC in der Kernschichtmischung 15 bis 40 Gew.-% beträgt.

9. Mehrschichtige Folie nach Anspruch 4 oder 5, wobei die Kernschichtmischung ein Polypropylen-Random-Copolymer (PP-RC) enthält.

10. Mehrschichtige Folie nach Anspruch 9, wobei der Anteil des PP-RC in der Kernschichtmischung 5 bis 30 Gew.-% beträgt.

11. Mehrschichtige Folie nach einem der Ansprüche 7 bis 10, wobei in dem Copolymer der Anteil des Comonomers mehr als 4 Gew.-% beträgt.

12. Mehrschichtige Folie nach einem der Ansprüche 5 bis 11, wobei die Kernschichtmischung 15 bis 60 Gew.-% Polypropylen enthält.

13. Mehrschichtige Folie nach einem der Ansprüche 1 bis 12, wobei die Kernschichtmischung zumindest ein Polyethylen als Polyolefin enthält.

14. Mehrschichtige Folie nach einem der Ansprüche 1 bis 13, wobei die Siegelschichtmischung und/oder die Druckschichtmischung jeweils 10 bis 30 Gew.-% Polypropylen enthalten.

15. Mehrschichtige Folie nach einem der Ansprüche 1 bis 14, wobei das Polypropylen-Random-Copolymer einen Comonomer-Anteil von mehr als 4 % aufweist.

16. Mehrschichtige Folie nach einem der Ansprüche 1 bis 15, wobei das Polypropylen-Random-Copolymer einen Schmelzeindex (MFI) von mehr als 1 aufweist.

17. Mehrschichtige Folie nach einem der Ansprüche 1 bis 16, wobei das in der Siegelschichtmischung und/oder in der Druckschichtmischung enthaltene Polyethylen zumindest eine aus der Gruppe LDPE, LLDPE, metallocenkatalysiertes LLDPE (mLLDPE) ausgewählte Komponente ist.

18. Mehrschichtige Folie nach einem der Ansprüche 1 bis 17, wobei die Siegelschichtmischung und/oder die Druckschichtmischung und/oder die Kernschichtmischung jeweils zumindest einen Kompatibilisator aufweisen.

19. Mehrschichtige Folie nach Anspruch 18, wobei die Siegelschichtmischung und/oder die Druckschichtmischung und/oder die Kernschichtmischung 1 bis 10 Gew.-% des Kompatibilisators enthalten.

20. Mehrschichtige Folie nach einem der Ansprüche 1 bis 19, wobei alle Schichten ein Polypropylen-Random-Copolymer enthalten.

## Claims

1. Multilayer film manufactured through co-extrusion, in particular packaging film, with a core layer made of a core layer mixture, a sealing layer made of a sealing layer mixture and a print layer made of a print layer mixture, wherein the core layer is arranged between the sealing layer and the print layer, wherein the core layer mixture contains at least one polyolefin and starch, preferably thermoplastic starch, and wherein the sealing layer mixture and the print layer mixture each contain respectively at least one polyolefin and starch, preferably thermoplastic starch, **characterized in that** the sealing layer mixture and/or the print layer mixture each contain at least one polypropylene, wherein the polypropylene contained in the sealing layer mixture and/or in the print layer mixture is a polypropylene random copolymer (PP-RC) and that the sealing layer mixture and/or the print layer mixture each contains a polyethylene as a polyolefin.

2. Multilayer film according to claim 1, wherein the starch content of the core layer mixture is higher, preferably at least twice as high, as the starch content of the print layer mixture and/or sealing layer mixture.

3. Multilayer film according to one of claims 1 or 2, wherein the core layer mixture contains between 5 and 50% by weight of starch.

4. Multilayer film according to one of claims 1 to 3, wherein the print layer mixture or the sealing layer mixture each contains from 2 to 25% by weight of starch.

5. Multilayer film according to one of claims 1 to 4, wherein the core layer mixture contains at least one polypropylene as a polyolefin.

6. Multilayer film according to claim 5, wherein the polypropylene has a melt flow index (MFI) of more than 1.

7. Multilayer film according to one of claims 5 or 6, wherein the core layer mixture contains a polypropylene block copolymer (PP-BC).

8. Multilayer film according to claim 7, wherein the proportion of the PP-BC in the core layer mixture is 15 to 40% by weight.

9. Multilayer film according to claim 4 or 5, wherein the core layer mixture contains a polypropylene random copolymer (PP-RC).

10. Multilayer film according to claim 9, wherein the proportion of the PP-BC in the core layer mixture is 5 to 30% by weight.

11. Multilayer film according to one of claims 7 to 10, wherein in the copolymer the proportion of the comonomer is more than 4% by weight.

12. Multilayer film according to one of claims 5 to 11, wherein the core layer mixture contains 15 to 60% by weight of polypropylene.

13. Multilayer film according to one of claims 1 to 12, wherein the core layer mixture contains at least one polypropylene as a polyolefin.

14. Multilayer film according to one of claims 1 to 13, wherein the sealing layer mixture and/or the print layer mixture each contain 10 to 30% by weight of polypropylene.

15. Multilayer film according to one of claims 1 to 14, wherein the polypropylene random copolymer has a comonomer content of more than 4%.

16. Multilayer film according to one of claims 1 to 15, wherein the polypropylene random copolymer has a melt flow index (MFI) of more than 1.

17. Multilayer film according to one of claims 1 to 16, wherein the polyethylene contained in the sealing layer mixture and/or in the print layer mixture is at least one component selected from the group consisting of LDPE, LLDPE, metallocene catalyzed LLDPE (mLLDPE).

18. Multilayer film according to one of claims 1 to 17, wherein the sealing layer mixture and/or the print layer mixture and/or the core layer mixture each have at least one compatibilizer.

19. Multilayer film according to claim 18, wherein the sealing layer mixture and/or the print layer mixture and/or the core layer mixture contain 1 to 10% by weight of the compatibilizer.

20. Multilayer film according to one of claims 1 to 19, wherein all the layers contain a polypropylene random copolymer.

## Revendications

1. Film multicouche fabriqué par coextrusion, en particulier film d'emballage, comportant une couche de noyau composée d'un mélange de couchs de noyau, d'une couche de scellement composée d'un mélange de couche de scellement et d'une couche d'impression composée d'un mélange de couchs d'impression, dans lequel la couche de noyau est disposée entre la couche de scellement et la couche d'impression, le mélange de couche de noyau contient au moins une polyoléfine et de l'amidon, de préférence de l'amidon thermoplastique, et le mélange de couche de scellement et le mélange de couche d'impression contiennent respectivement au moins une polyoléfine et respectivement de l'amidon, de préférence de l'amidon thermoplastique, **caractérisé en ce que** le mélange de couche de scellement et le mélange de couche d'impression contiennent respectivement au moins un polypropylène, le polypropylène contenu dans le mélange de couche de scellement et/ou dans le mélange de couche d'impression est un copolymère aléatoire de polypropylène (PP-RC) et **en ce que** le mélange de couche de scellement et/ou le mélange de couche d'impression contiennent respectivement un polyéthylène sous forme de polyoléfine.

2. Film multicouche selon la revendication 1, dans lequel la teneur en amidon du mélange de couche de noyau est supérieure, de préférence représente au moins le double, à la teneur en amidon du mélange de couche d'impression et/ou du mélange de couche de scellement.

3. Film multicouche selon une des revendications 1 ou 2, dans lequel le mélange de couche de noyau contient de 5 à 50 % en poids d'amidon.

4. Film multicouche selon une des revendications 1 à 3, dans lequel le mélange de couche d'impression ou le mélange de couche de scellement contiennent respectivement 2 à 25 % en poids d'amidon.

5. Film multicouche selon une des revendications 1 à 4, dans lequel le mélange de couche de noyau contient au moins un polypropylène sous forme de polyoléfine.

6. Film multicouche selon la revendication 5, dans lequel le polypropylène présente un indice de fusion (MFI) de plus de 1.

7. Film multicouche selon une des revendications 5 ou 6, dans lequel le mélange de couche de noyau contient au moins un copolypropylène bloc de polypropylène (PP-BC).

8. Film multicouche selon la revendication 7, dans lequel la part du PP-BC dans le mélange de couche de noyau représente 15 à 40 % en poids.

9. Film multicouche selon la revendication 4 ou 5, dans lequel le mélange de couche de noyau contient au moins un polypropylène aléatoire de polypropylène (PP-RC).

10. Film multicouche selon la revendication 9, dans lequel la part du PP-RC dans le mélange de couche de noyau représente 5 à 30 % en poids.

11. Film multicouche selon une des revendications 7 à 10, dans lequel la part du comonomère dans le copolymère est de plus de 4 % en poids.

12. Film multicouche selon une des revendications 5 à 11, dans lequel le mélange de couche de noyau contient 15 à 60 % en poids de polypropylène.

13. Film multicouche selon une des revendications 1 à 12, dans lequel le mélange de couche de noyau contient au moins un polyéthylène sous forme de polyoléfine.

14. Film multicouche selon une des revendications 1 à 13, dans lequel le mélange de couche de scellement et/ou le mélange de couche d'impression contiennent respectivement 10 à 30 % en poids de polypropylène.

15. Film multicouche selon une des revendications 1 à 14, dans lequel le copolymère aléatoire de polypropylène présente une proportion de comonomère de plus de 4 %.

16. Film multicouche selon une des revendications 1 à 15, dans lequel le copolymère aléatoire de polypropylène présente un indice de fusion (MFI) de plus de 1.

17. Film multicouche selon une des revendications 1 à 16, dans lequel le polyéthylène contenu dans le mélange de couche de scellement /et le mélange de couche d'impression est au moins un composant sélectionné dans le groupe composé de LDPE, LLDPE, LLDPE catalysé au métallocène (mLLDPE).

18. Film multicouche selon une des revendications 1 à 17, dans lequel le mélange de couche de scellement et/ou le mélange de couche d'impression et/ou le mélange de couche de noyau présentent respectivement au moins un agent de compatibilisation.

19. Film multicouche selon la revendication 18, dans lequel le mélange de couche de scellement et/ou le mélange de couche d'impression et/ou le mélange de couche de noyau contiennent 1 à 10 % en poids d'agent de compatibilisation.

20. Film multicouche selon une des revendications 1 à 19, dans lequel toutes les couches contiennent un copolymère aléatoire de polypropylène.
